# EUROPÄISCHE PATENTANMELDUNG

(11) **EP 3 599 550 A1**
(43) Veröffentlichungstag der Anmeldung: **29.01.2020**
(21) Anmeldenummer: 18186070.1
(22) Anmeldetag: 27.07.2018
(51) Int. Cl.: G06F 8/60

(54) **VERFAHREN UND SERVER ZUR VERTEILUNG VON SOFTWARE AUF EINE ANZAHL COMPUTER IN EINEM NETZWERK**

(71) Anmelder: Siemens Aktiengesellschaft, 80333 München (DE)
(72) Erfinder: Geissler, Klaus, 76532 Baden-Baden (DE); Geyer, Wenna, 76646 Bruchsal (DE); Kuznetsov, Sergej, 76767 Hagenbach (DE)

(57) **Zusammenfassung**

Die Erfindung betrifft ein Verfahren und einen Server zur Verteilung von Software auf eine Anzahl von Computern (C1, ..., C5) in einem Netzwerk, wobei insbesondere einer industriellen Automatisierungsanordnung, wobei auf zumindest einem zentralen Server (SRV) eine Anzahl verschiedener Software-Einheiten (SE1, ..., SEn) bereitgestellt wird. Dabei wird in einem ersten Schritt in dem oder für den zumindest einen zentralen Server (SRV) eine Anzahl Profile gespeichert, wobei jedem der Profile jeweils eine Untermenge der Software-Einheiten (SE1, ..., SEn) zugeordnet wird, in einem zweiten Schritt für zumindest einen der Computer (C1, ..., C5) anhand seiner Eigenschaften die Zugehörigkeit zu zumindest einem der Profile (PD1, ..., PDn) festgestellt wird, und in einem dritten Schritt die dem festgestellten Profil (PD1, ..., PDn) oder den festgestellten Profilen zugeordneten der Software-Einheiten (SE1, ..., SEn) zu diesem Computer (C1, ..., C5) übertragen und dort installiert oder angewendet werden. Durch dieses Verfahren ist ein zielgenauer Roll-Out oder "deployment" unter weitgehender Einsparung manueller Administrations-Tätigkeiten möglich, was zu einer Effizienz-Steigerung, einer erhöhten Qualität beim Software-Installationsstand und in der Folge zu einer Kostenersparnis führt.

## Beschreibung

Die Erfindung betrifft ein Verfahren zur Verteilung von Software auf eine Anzahl Computer in einem Netzwerk gemäß dem Oberbegriff des Patentanspruchs 1, und einen Server zur Verteilung von Software auf eine Anzahl Computer in einem Netzwerk gemäß dem Oberbegriff des Patentanspruchs 12.

Moderne mikroprozessorgesteuerte Geräte, insbesondere Komponenten in industriellen Automatisierungsanordnungen wie z. B. industrielle Steuerungen (speicherprogrammierbare Steuerungen; SPS), Bedien- und Beobachtungsgeräte (HMI-Komponenten), Netzwerk-Komponenten (Router, Switches, Bridges, Gateways, Firewalls) und andere Geräte, die im Folgenden unter dem Begriff "Computer" subsummiert werden sollen, werden regelmäßig mit einer Vielzahl von Software-Einheiten betrieben, also Software-Komponenten, die eine Firmware sein können, Teile eines Betriebssystems sind, Anwendungsprogramme oder zumindest Teile davon sind, etc. Dabei soll als Software-Einheit die kleinste Einheit betrachtet werden, die bei einer NeuInstallation oder einem Update getrennt verwaltet wird. Meist haben solche Software-Einheiten dann auch eine eigene Versionsnummer oder Versionsbezeichnung. Eine Software-Einheit im Sinne der vorliegenden Erörterung kann aber auch ein komplettes Anwendungsprogramm, insbesondere eine sogenannte "App" eines mobilen Gerätes, oder auch eine Funktionalität sein, die nur durch die Übertragung eines Schlüssels oder einer sonstigen Berechtigungsinformation zur Benutzung freigeschaltet oder entsprechend gesperrt wird.

Die Übertragung und Anwendung, insbesondere Installation, von Software, Software-Einheiten, insbesondere auch Updates, Service-Packs, Security-Patches, etc. ist gängige Praxis. Insbesondere das Update von bereits installierter Software oder "Apps" bei der Bereitstellung erneuerter oder fehlerkorrigierter Fassungen erfolgt oft automatisch "im Hintergrund", ohne dass ein Benutzer oder gar ein Administrator diesen Vorgang explizit steuern muss. Der Grund dafür ist, dass bei einem Software-Update sich ein System, insbesondere ein Update-Server oder der installierte Client-Rechner, an der bereits installierten Software bzw. Software-Einheiten orientieren kann und somit genau und vor allen Dingen automatisch entschieden werden kann, ob das Update, Service-Pack, etc. kurz: die Software-Einheiten, auf diesem Client-Rechner angewendet werden soll, wobei mit dem Begriff "angewendet" zumindest die Übertragung der Software-Einheiten zu dem entsprechenden Ziel, also dem Computer oder Client-Rechner, und ggf. - sofern notwendig - die Installation der entsprechenden Software-Einheiten auf diesem Ziel gemeint sein soll.

Dieses Konzept der mehr oder weniger vollautomatischen Verteilung von Software, also das "Ausrollen" oder "deployment" von Software-Einheiten, lässt sich bei neuer, also noch nicht in einer älteren Version bereits installierten Software bei vielen Client-Rechnern oder kurz "Computern" nicht umsetzen, da es bei einer solchen "Neuinstallation" keine Kriterien gibt, die Aufschluss darüber geben, ob dieser Computer die neue Software benötigt, oder nicht.

Im Stand der Technik kann im Wesentlichen zwischen zwei grundsätzlich verschiedenen Konzepten zur Lösung dieser Aufgabe unterschieden werden. In einer ersten Variante wird die Software bzw. die Software-Einheiten im gesamten erreichbaren Netz "ausgerollt", was einem Push-Prinzip entspricht und vor allen Dingen dort angewendet werden kann, wo eine große Anzahl von Computern mit im Wesentlichen der gleichen Software-Ausstattung versehen werden soll, beispielsweise in einer reinen Büro-Umgebung oder in einer Produktionsanlage mit vielen gleichartig ausgestalteten Computern. Dieses breite Verteilen von Software hat jedoch einige Nachteile, insbesondere erhöhte Lizenzkosten durch die Verteilung von Software-Einheiten an solche Computer oder Clients, die die entsprechende Software überhaupt nicht benötigen, eine erhöhte Netzlast durch unnötige Installationen, ein erhöhter Speicherbedarf auf den Computern durch unnötig installierte Software, und ein unnötiger Aufwand für Updates zu dieser installierten, aber tatsächlich nicht verwendeten Software.

Ein anderes Verteilungsmodell sieht vor, dass Software nur an einer zentralen Stelle bereitgestellt wird und die Administratoren der Computer oder Client-Rechner lediglich über die Bereitstellung dieser Software informiert werden, was einem Pull-Prinzip entspricht, weil diese Administratoren dann entscheiden müssen, ob der betreffende Computer oder Client-Rechner die Software benötigt, und diese ggf. von der zentralen Stelle beziehen. Dieses Prinzip hat zum Nachteil, dass eine erhöhte Belastung der Client-Administratoren gegeben ist, Lastspitzen durch das zeitgleiche Anfordern neuer Software entstehen können und durch das Pull-Prinzip auch uneinheitliche Ausgabestände (Versionen) einer Software innerhalb des Netzwerks gegeben sein können.

Es ist also eine Aufgabe der vorliegenden Erfindung, ein verbessertes Verfahren zur Verteilung von Software auf eine Anzahl Computer in einem Netzwerk vorzuschlagen.

Es ist eine Kernidee der erfindungsgemäßen Lösung dieser Aufgabe, dass alle Computer oder Geräte eines Netzwerks, in dem das automatische Roll-Out von Software-Einheiten erfolgen soll, einem Profil zugewiesen werden, was beispielsweise bei einer Grundinstallation oder Erstinbetriebnahme geschehen kann. Profile können verschiedene Arten von Informationen enthalten, insbesondere Eigenschaften des Gerätes oder Eigenschaften der Betriebsumgebung des Gerätes. Ein Computer kann dabei einem oder mehreren verschiedenen Profilen zugeordnet werden, wobei wiederum jedem dieser Profile eine Anzahl oder Untermenge der verfügbaren Software-Einheiten oder "Programme" oder "Apps" zugeordnet ist. Erfindungsgemäß werden zu diesem Computer dann diese Programme, Software-Einheiten oder "Apps" übertragen, die denjenigen Profilen zugeordnet sind, die wiederum diesem Computer zugeordnet sind. Somit kann eine Verteilung der verschiedenen Software-Einheiten zielgenau, kontrolliert und weitgehend vollautomatisch erfolgen.

Die Lösung der Aufgabe sieht insbesondere den Einsatz des Verfahrens gemäß Patentanspruch 1 und den Einsatz eines Servers gemäß dem Patentanspruch 12 vor.

Dabei wird ein Verfahren zur Verteilung von Software auf eine Anzahl Computer in einem Netzwerk vorgeschlagen, insbesondere einer industriellen Automatisierungsanordnung, wobei auf zumindest einem zentralen Server eine Anzahl verschiedener Software-Einheiten bereitgestellt wird. Dabei wird in einem ersten Schritt in dem oder für den zumindest einen zentralen Server eine Anzahl Profile gespeichert, wobei jedem der Profile jeweils eine Untermenge der Software-Einheiten zugeordnet wird, in einem zweiten Schritt für zumindest einen der Computer anhand seiner Eigenschaften die Zugehörigkeit zu zumindest einem der Profile festgestellt wird, und in einem dritten Schritt die dem festgestellten Profil oder den festgestellten Profilen zugeordneten der Software-Einheiten zu diesem Computer übertragen und dort installiert oder angewendet werden. Durch dieses Verfahren ist ein zielgenauer Roll-Out oder "deployment" unter weitgehender Einsparung manueller Administrations-Tätigkeiten möglich, was zu einer Effizienz-Steigerung, einer erhöhten Qualität beim Software-Installationsstand und in der Folge zu einer Kostenersparnis führt.

Die Aufgabe wird außerdem durch einen Server zur Verteilung von Software auf einer Anzahl Computer in einem Netzwerk gelöst, insbesondere einer industriellen Automatisierungsanordnung, wobei auf diesem zentralen Server eine Anzahl verschiedener Software-Einheiten bereitgestellt ist. Dabei ist auf dem oder zugreifbar für den zentralen Server eine Anzahl Profile gespeichert, wobei jedem der Profile jeweils eine Untermenge der Software-Einheiten zugeordnet ist, wobei der Server dazu eingerichtet ist, für zumindest einen der Computer anhand seiner Eigenschaften die Zugehörigkeit zu zumindest einem der Profile festzustellen, und wobei der Server dazu eingerichtet ist, die dem festgestellten Profil oder den festgestellten Profilen zugeordneten Software-Einheiten zu diesem Computer zu übertragen. Durch eine solche Anordnung bzw. einen solchen Server können die Vorteile realisiert werden, die bereits anhand des Verfahrens diskutiert wurden.

Vorteilhafte Ausgestaltungen des erfindungsgemäßen Verfahrens sind in den abhängigen Patentansprüchen angegeben. Die dabei offenbarten Merkmale und deren Vorteile gelten sinngemäß auch für den erfindungsgemäßen Server. Die vorteilhaften Ausgestaltungen können sowohl einzeln, als auch in sinnfälliger Kombination miteinander realisiert werden.

Besonders vorteilhaft wird als Computer eine industrielle Automatisierungskomponente verwendet. Wegen der Vielzahl verschiedener industrieller Automatisierungskomponenten ist es in diesem technischen Umfeld besonders schwierig, die Verteilung von Software und Software-Einheiten manuell zu administrieren. Insbesondere sind für viele industrielle Komponenten die Möglichkeiten, die eigene Software-Ausstattung mittels eines Pull-Verfahrens zu bewerkstelligen, aufgrund der spezifischen Ausgestaltung dieser Geräte nur schwierig zu bewerkstelligen. Das erfindungsgemäße Verfahren ermöglicht besonders in diesem Umfeld, unterschiedlichste Komponenten mit unterschiedlichsten Software-Ausstattungen zielgenau zu versehen und aktuell zu halten.

In einer ersten vorteilhaften Variante können die Profile bei einer Grundinstallation der Computer festgelegt und auf diesem gespeichert werden oder aber für diese Computer jeweils zugeordnet auf einem zentralen Server oder in einem anderweitigen Speichermittel gespeichert werden. Vorteilhaft wird der Vorgang der Zuweisung des Computers zu den Profilen weitgehend oder vollständig automatisiert, wobei in einer vorteilhaften Variante als Kriterium für die Zuweisung des Computers zu den Profilen ein Geräte-Typ des Computers verwendet wird, insbesondere die Information darüber, ob es sich bei dem Computer um eine industrielle Steuerung (SPS), ein Bedien- oder Beobachtungsgerät (HMI), eine Netzwerk-Komponente (Router, Switches, Bridges, Gateways, Firewalls) oder einen anderen Geräte-Typ handelt. Alternativ oder zusätzlich zu den genannten Eigenschaften können für die Zuweisung des Computers zu den Profilen als weitere Eigenschaften topologische Informationen verwendet werden, insbesondere die Zugehörigkeit des Computers zu einer spezifischen Teilanlage, einer spezifischen Produktionslinie, einem bestimmten physischen Netzwerk-Segment, einem Ort, die Identität benachbarter Computer oder Geräte und dergleichen. Als Eigenschaft kann alternativ oder zusätzlich auch die logische Zugehörigkeit des Computers zu einem (logischen) Netzwerk-Segment verwendet werden, insbesondere die Zugehörigkeit zu einem ERP-Netz (ERP = Enterprise Ressource Planing), zu einem redundanten Anlagenbus, zu einem Verwaltungs-Netzwerk, zu einem Feldbus-Netzwerk oder aber auch zu einem Segment hinter einer spezifischen Firewall. Vorteilhaft wird in solchen Fällen auch bezüglich der Profile zwischen Geräte-Profilen, topologischen Profilen und logischen Profilen etc. unterschieden.

Besonders vorteilhaft wird das Verfahren bei einem neu in das Netzwerk eingebrachten Computer oder allgemein "Gerät" durchgeführt, wobei dann automatisch die Zuordnung zu einem oder mehreren Profilen erfolgt und dann auch automatisch die diesen neu zugeordneten Profilen entsprechender Software-Einheiten zu diesem Computer übertragen werden bzw. diesem bereitgestellt werden. Ein weiterer vorteilhafter Anwendungsfall betrifft das "Update", also die Aktualisierung der auf einem Computer installierten Software-Einheiten. Dabei können mehrere Fälle unterschieden werden. Zum einen ist es möglich, dass die Zuordnung des Computers zu den Profilen geändert wird, also beispielsweise ein weiteres Profil hinzugefügt wird oder ein anderes Profil in der Zuordnung dieses Computers entfällt. Dann soll und kann vollautomatisch die auf diesem Computer installierte Software, also die Gesamtheit der Software-Einheiten dieses Computers, an die neue Zuordnung angepasst werden. Insbesondere kann die Überprüfung, ob ein Computer zu einem Profil zugeordnet sein soll, oder auch nicht, in regelmäßigen Zeitabständen automatisch überprüft und erneuert werden. Ein weiterer Fall betrifft die geänderte Zuordnung von Software-Einheiten zu den Profilen. Auch in diesem Fall kann dann automatisch die "Software-Landschaft" des betreffenden Computers an die aktualisierten ProfilInformationen und Profil-Zuordnungen angepasst werden. Ein dritter Fall der Aktualisierung betrifft die Fälle, in denen zwar prinzipiell die Software-Einheiten unverändert dem entsprechenden Computer zuzuweisen oder zuzuordnen oder zu installieren sind, sich deren Ausgabestände (Version) jedoch geändert haben, beispielsweise bei Sicherheits-Updates, Verfügbarkeit neuer Versionen etc. Dann kann über das hier geschildete Verfahren und dem geschilderten Server eine Aktualisierung der bereits installierten Software-Einheiten auf dem Computer angestoßen werden.

In einer vorteilhaften Variante werden Informationen über die Eigenschaften des Computers oder die Eigenschaften im Sinne einer logischen Positionierung oder tatsächlichen, topologischen Anordnung zumindest teilweise von diesem Computer zu dem zentralen Server übertragen. Es ist jedoch in einer vorteilhaften Variante auch möglich, dass anhand einer Identifizierung eines Computers von dem zentralen Server bei einer anderen Einheit Informationen über die Eigenschaften dieses Computers abgerufen werden und danach die Zuweisung zu den Profilen erfolgt. Selbstverständlich sind auch Mischformen möglich.

Obwohl der zentrale Server in einer vorteilhaften Variante, beispielsweise einer in sich geschlossenen Produktionsumgebung, tatsächlich als ein einzelner Server ausgeführt sein kann, sind andere vorteilhafte Varianten möglich, in denen der Server als ein Dienst in einem Netzwerk bereitgestellt wird, beispielsweise in einem Intranet, dem Internet, oder auch einer sogenannten "Cloud"-Umgebung. Mit anderen Worten: der Server kann auch als ein verteilter Dienst ausgeführt sein, also in seiner Funktionalität und in seinem Datenbestand nicht an eine einzelne Hardware-Komponente gebunden sein, sondern auch verteilt sein auf eine Vielzahl von Komponenten. Insbesondere können auch die diesbezüglichen Informationen über die Profile und die Software-Zuordnungen zu den Profilen in Form einer verteilten Datenbank gespeichert sein, insbesondere auch in Form einer sogenannten "Blockchain".

Vorteilhaft kann das hier geschilderte Konzept auch um Sicherheitsaspekte erweitert werden, wobei es beispielsweise in einer vorteilhaften Variante möglich ist, dass die Computer oder zumindest einige der Computer mit sogenannten Zertifikaten versehen sind, wobei diese Zertifikate von dem betreffenden Computer zu dem zentralen Server übertragen werden oder von dem zentralen Server bei einer anderen Instanz über diesen Computer abgerufen werden. Eine spätere Übertragung von Software-Einheiten zu diesem Computer oder die Freischaltung von Funktionalitäten für diesen Computer kann dann von der Gültigkeit des Zertifikates oder der Zertifikate für den entsprechenden Computer und für die angeforderte Funktionalität oder Software-Einheit abhängig gemacht werden.

Ein Ausführungsbeispiel des erfindungsgemäßen Verfahrens wird nachfolgend anhand der Zeichnung erläutert. Dies dient gleichzeitig der Erläuterung eines erfindungsgemäßen Servers bzw. einer erfindungsgemäßen Anordnung.

Dabei zeigen:
- Figur 1: die logischen Beziehungen zwischen den beteiligten Einheiten, insbesondere der Profile, Software-Einheiten und der Computer, und
- Figur 2: ein vereinfachtes Sequenz-Diagramm für den Informationsfluss zwischen einem Computer, dem zentralen Server und ggf. einem Administrator.

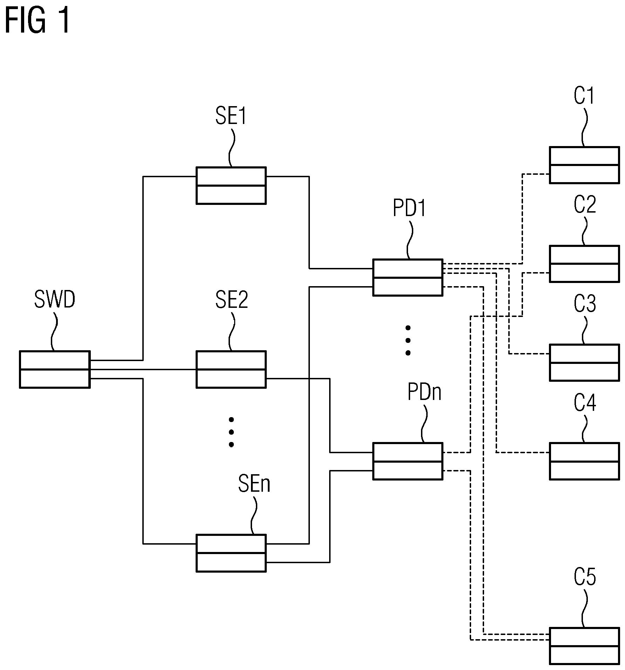

In der Figur 1 ist schematisch die Struktur einer Datenbank dargestellt, die in einem zentralen Server oder in einem verteilten Speicher (z.B. Cloud) die Verteilung und Pflege von Software in einem Computernetzwerk bestimmt. Im linken Teil der Figur 1 ist ein Verzeichnis SWD ("Dictionary of SW units") für die Softwareeinheiten SE1, SE2, ..., SEn ("SW units") dargestellt. In der Praxis können natürlich auch mehrere Verzeichnisse SWD und eine viel größere Anzahl von Software-Einheiten gegeben sein. Die Software-Einheiten SE1, SE2, .... SEn sind einer Anzahl Profilen PD1, ..., PDn ("profile dictionary") zugeordnet. Wie bereits in der Figur 1 angedeutet ist, können Software-Einheiten mehreren Profilen zugeordnet sein. Weiter sind in der Figur 1 verschiedene Computer C1, ..., C5 dargestellt, welche nicht nur Computer im Sinne von Personal-Computern oder Servern sein können, sondern allgemein mikroprozessorgesteuerte Geräte, die in der Lage sind, mit Software und Software-Einheiten programmiert oder "upgedated" zu werden. Die Computer C1, ..., C5 sind den verschiedenen Profilen PD1, ..., PDn zugeordnet, wobei auch hier ein- und derselbe Computer mehreren Profilen zugeordnet sein kann; in der Figur betrifft das bspw. den Computer C5, der beiden dargestellten Profilen PD1 und PDn zugeordnet ist.

Die Zuordnung der Software-Einheiten SE1, ..., SEn zu den Profilen PD1..., PDn und die Zuordnung der Computer C1, ..., C5 zu den Profilen PD1, ..., PDn kann, wie hier angedeutet, in einer einzigen Profil-Datenbank und damit sogar in einer Datei oder Tabelle erfolgen. In einer weiteren, nicht dargestellten Variante kann jedoch in einer ersten Datei, Tabelle oder Teil-Datenbank die Zuordnung von Software-Einheiten zu den Profilen und in einer weiteren Datei, Tabelle oder Teil-Datenbank eine weitere Zuordnung der Computer zu den Profilen gespeichert sein. Auch andere Gliederungen des Datenbestandes und der Zuordnungen sind möglich, ohne von der Kernidee der hier skizzierten Lösung abzuweichen.

Alle Computer C1,..., C5 und andere Geräte des hier betrachteten Netzwerks, über das ein "Roll-Out" oder ein "Update" von Software erfolgt, erhalten bei der Grundinstallation bzw. einer Erst-Inbetriebnahme ein Profil. Die Profile können verschiedene Arten von Informationen enthalten, wie bspw. Typ des Geräts (z.B. Speicherprogrammierbare Steuerung - PLC) oder Computers (z.B. ein Archiv-Server), eine Maintenance Station, eine Netzwerk-Bridge, ein Inbetriebsetzungs-Notebook etc. Weitere mögliche Informationen sind topologische Informationen, z.B. Zugehörigkeit zu einer Teilanlage, einer Produktionslinie oder anderen physikalisch oder geographisch unterscheidbaren Bereichen. Eine dritte Art von möglichen Informationen betrifft die Zugehörigkeit zu bestimmten logischen Bereichen, bspw. bestimmten Netzen und Teil-Netzen (z.B. ERP-Netz), zu einem redundanten Anlagenbus, zu einer bestimmten Sicherheitszone, etc. Mit diesen Informationen registrieren sich die Computer C1, ..., C5 bzw. Geräte beim Server ("Roll-Out-Server"). Wie bereits anhand der Figur 1 erläutert, hält dieser Roll-Out-Server neben der Zuordnung von Geräten bzw. Computern C1, ..., C5 zu Profilen PD1, ..., PDn auch eine Zuordnung der ausrollbaren/installierbaren Software-Einheiten SE1, ..., SEn zu den Profilen PD1, ..., PDn, wobei in beiden Fällen eine Mehrfach-Zuordnung möglich ist.

Soll eine Software-Einheit SE1, ..., SEn "ausgerollt" bzw. auf den oder die passenden der Computer C1, ..., C5 übertragen bzw. dort installiert, angewendet oder freigeschaltet werden, so sucht der Roll-Out-Server nach allen Profilen PD1, ..., PDn, denen diese Software-Einheit SE1, ..., SEn zugeordnet ist und bildet eine Übermenge der Geräte/Computer C1, ..., C5 dieser Profile PD1, ..., PDn. Auf diese Menge bzw. "Übermenge" von Geräten bzw. Computern C1, ..., C5 wird die jeweilige Software-Einheit SE1, ..., SEn ausgerollt, d.h., zu diesem jeweils zugeordneten der Computer C1, ..., C5 übertragen und dort angewendet, also bspw. installiert oder gespeichert. Die Software-Einheiten SE1, ..., SEn können in einer Variante der Erfindung nicht als solche, also als ausführbarer Programmcode, übermittelt werden, sondern es kann in dieser Variante auch nur eine Berechtigung oder eine Zugriffsinformation (z.B. ein Download-Link) übertragen werden, wonach der entsprechende Computer C1, ..., C5 dann selbst für den Bezug, die Freischaltung und/oder die Inbetriebnahme sorgt. Die Übertragung, Inbetriebnahme oder Installation von Software-Einheiten SE1, ..., SEn kann auch von dem Vorhandensein von Berechtigungen, Zertifikaten oder der Zustimmung eines Benutzers (Freigabe-Dialog) abhängig gemacht werden. Weiterhin kann eine Software-Einheit auch aus weiteren Unter-Einheiten bestehen, die dann sämtlich zu übertragen und zu verwenden sind, sofern die übergeordnete Software-Einheit für ein entsprechendes Gerät bestimmt ist.

Zu erwähnen ist weiterhin, dass sich Profile auch dynamisch ändern können, also während der Laufzeit eines Systems oder eines Netzwerks sich sowohl die Zuordnung von Computern zu Profilen ändern kann, als auch die Zuordnung von Software-Einheiten zu Computern. Weiterhin kann die Zuordnung von Software-Einheiten zu Profilen auch eine Abhängigkeit von Versions-Bezeichnungen umfassen, so dass bspw. bestimmte der Geräte und Computer nur für bestimmte Versionen der entsprechenden Software zugelassen sind oder dergleichen. Weiter ist es möglich, dass die Profile Querbedingungen enthalten. Dies bedeutet, dass bspw. eine Software-Einheit SE2 nur dann auf einem Computer installiert werden darf, wenn eine andere Software-Einheit SE1 in einer bestimmten Version dort bereits installiert ist oder auch installiert wird, oder Ausschlüsse, die nur eine Installation erlauben, wenn eine andere Software-Einheit eben nicht auf diesem Computer installiert oder für diesen vorgesehen ist. Gleiches gilt für Software-Updates, deren "Roll-Out" bspw. für eine Software-Einheit daran gekoppelt sein kann, dass eine andere Software-Einheit auch upgedated wird oder upgedated ist auf eine bestimmte Version. Weiter können die Profile auch Informationen über Prioritäten enthalten, die besagen, welche Profile in welcher Reihenfolge installiert oder upgedated werden sollen, um Lastspitzen zu vermeiden oder um zu gewährleisten, dass nicht alle Geräte und Computer eines Netzwerks gleichzeitig wegen der Installation oder wegen des Updates von Software nicht verfügbar sind.

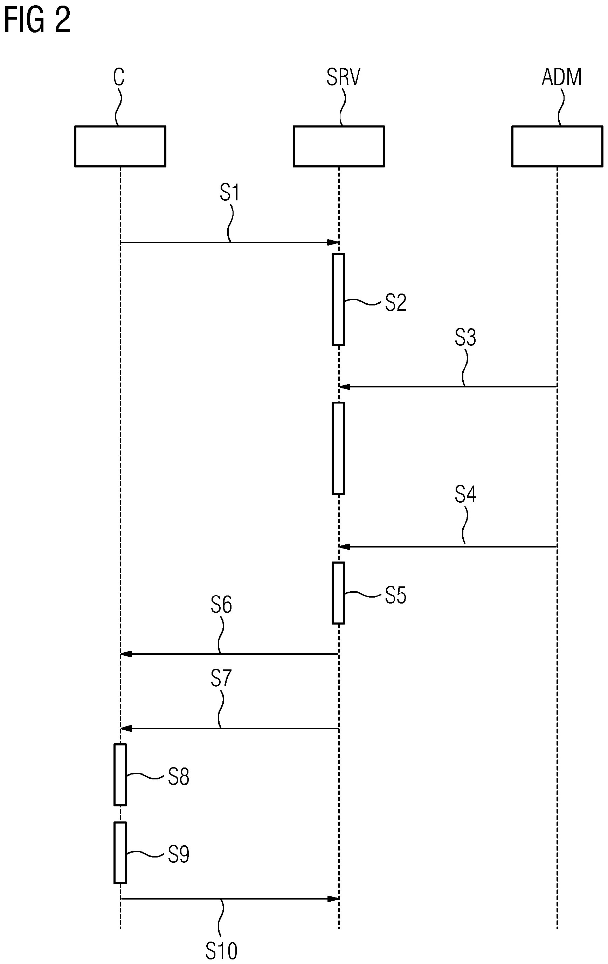

In der Figur 2 ist ein vereinfachtes Sequenzdiagramm dargestellt, welches den Informationsfluss zwischen einem Computer C (Client Computer), einem Server S (Roll-Out-Server) und einem Administrator ADM (Server-Administrator) darstellt. Dabei wird in einem ersten Schritt S1 der Computer C bei dem Server SRV registriert mit seinem Profil bzw. seinen Profil-Eigenschaften. Dieser Schritt kann, wie hier dargestellt, vom Computer selbst vorgenommen werden, es ist aber auch möglich, dass der Computer C von einer dritten Instanz bei dem Server SRV registriert wird. Registrierung bedeutet dabei, dass entweder bereits eine Information über die Zuordnung des Computers C zu einem Profil dem Server SRV mitgeteilt wird, oder aber, dass dem Server SRV Informationen bereitgestellt werden, die es ihm ermöglichen, den Computer C den passenden Profilen selbst zuzuordnen. Die Zuordnung des Computers C zu einem oder mehreren der Profile findet in dem Schritt S2 statt.

In einem dritten Schritt S3 bearbeitet ein Administrator ADM die auf dem Server SRV gespeicherten Profile bzw. Profilinformationen, indem diesen Profilen bzw. Profilinformationen die Informationen über die verfügbaren Software-Einheiten und darüber, welchen Profilen die einzelnen Software-Einheiten zugeordnet sein sollen, zugefügt werden. Außerdem werden in diesem Schritt entweder die Software-Einheiten dem Server SRV übermittelt, oder aber es werden Zugriffsinformationen (z.B. Download-Links) den Profilen zugeordnet, die es später ermöglichen, die Software-Einheiten zu erlangen. Der Schritt S3 kann, wie hier dargestellt, zeitlich nach dem Schritt S2 durchgeführt werden, jedoch auch zu einem gänzlich anderen Zeitpunkt, insbesondere auch weit vor dem Registriervorgang in Schritt S1.

Im nächsten Schritt S4 ("Request of Roll-Out") gibt der Administrator ADM das Kommando zum Verteilen der Software. Obwohl dieser Schritt S4 als manueller Schritt des Administrators ADM ausgeführt ist, kann in einer Variante dieser manuelle Vorgang auch entfallen, so dass der Roll-Out von Software automatisch erfolgt, bspw. nach einem festgelegten Zeitraster oder immer dann, wenn die Profile bearbeitet worden sind. Ebenso kann der Roll-Out auch von einem Computer C angefordert werden, bspw. nach dessen Erstinbetriebnahme, einer Neuinstallation oder nach einer entsprechenden Eingabe eines Benutzers. Entsprechend kann der Roll-Out entweder das ganze Netzwerk gleichzeitig betreffen, oder auch nur einen Teil, was bedeutet, dass nur ein Teil der Computer betroffen sein kann, ein Teil der Profile, oder auch nur ein Teil der Software-Einheiten.

Im nächsten Schritt S5 entscheidet der Server SRV darüber, welche Computer C vom nächsten Roll-Out betroffen sein sollen. Soll also bspw. die nächste Verteilung von Software nur für eine Anzahl von Profilen der Computer erfolgen, so werden alle diejenigen Computer für den Software-Verteilmechanismus vorgemerkt, die den entsprechenden Profilen zugeordnet sind. Andererseits kann auch vorgesehen sein, dass nur solche Profile und damit die zugeordneten Computer installiert, reinstalliert oder "upgedated" werden sollen, deren Profile eine bestimmte Software-Einheit enthalten. Weiter ist es möglich, dass zwar aufgrund der Profile eine große Anzahl oder alle Computer betroffen sind, aber in dem Server SRV Informationen über die auf den Computern C bereits installierten Software-Einheiten und deren Versionen (Ausgabestände) gespeichert sind, wobei dann nur solche Computer nur tatsächlich installiert oder upgedated werden, die sich noch nicht auf dem erforderlichen Stand gemäß ihrer zugewiesenen Profile befinden.

In einem nächsten Schritt S6 informiert der Server SRV einen betroffenen Computer C darüber, dass neue oder geänderte Software bereitsteht. Dieser Schritt S6 wird solange wiederholt, in der Figur bspw. auch als Schritt S7, bis der Computer C in einem Schritt S8 die für ihn vorgesehenen Software-Einheiten lädt. Dazu enthalten die in den Schritten S6 oder S7 übertragenen Notifizierungen auch eine Liste der zu ladenden Software-Einheiten und eine Information darüber, wo (z.B. mittels eines Download-Links) die entsprechenden Software-Einheiten bereitliegen. Natürlich können diese Informationen über die "Quelle" auch bereits in dem Computer C administriert sein, andererseits ist es auch möglich, dass der Server SRV auch aktiv diese Software-Einheiten übermittelt, bspw. mittels eines "Push"-Verfahrens.

In einem nächsten Schritt S9 installiert der Computer C die übermittelte Software. Im Falle eines Updates bedeutet das, dass die vorherige Version ggf. vorher entfernt wird und durch eine neue Version ersetzt wird; der zu ersetzende Teil der Software wird sicherheitshalber vorher gesichert, beispielsweise in Form eines komprimierten Backups, und erst im Falle einer erfolgreichen Installation der neuen Version später gelöscht. In anderen Ausführungsbeispielen, die bspw. mobile Geräte wie Tablet-Computer oder Mobiltelefone mit mobilen Betriebssystemen betreffen, ist in einigen Fällen eine konkrete Installation der Software-Einheiten, die dort auch "App" genannt werden, im tieferen Sinne nicht notwendig; in solchen Fällen mag es reichen, wenn die entsprechende Software-Einheit schlicht gespeichert wird.

In einem weiteren, abschließenden Schritt S10 bestätigt der Computer C dem Server SRV die Installation bzw. Freischaltung der entsprechenden Software-Einheit, die zuvor geladen wurde, so dass der Server SRV sein Verzeichnis mit auf den Computern installierten Software-Einheiten entsprechend aktualisieren kann.

Anstelle der hier genannten Software-Einheiten im Sinne von Programmen oder Programmcode können als Software-Einheiten auch Berechtigungen für die Nutzung bereits installierter Software-Pakete oder Funktionen verteilt werden.

Wie bereits am Schritt S4 exemplarisch erläutert, ist der hier vorgeschlagene Ablauf nur ein Ausführungsbeispiel für eine nahezu unbegrenzte Anzahl anderer Abläufe, die in der konkreten Abfolge und Reihenfolge der Schritte Abweichungen aufweisen, aber von dem hier gezeigten Prinzip der Software-Verteilung mittels Profilen, die bezogen auf den Computer C aus Eigenschaften abgeleitet werden, und denen auf der anderen Seite Software-Einheiten zugeordnet sind, Gebrauch machen.

Kern der Lösung sind also Geräte- oder Computer-Profile und deren Berücksichtigung bei Clients und dem Roll-Out-Server. Wichtig sind dabei das Daten-Modell der Profile sowie seine Referenzen auf Geräte, Computer und "Dictionaries" (Verzeichnisse) der Software-Einheiten.

## Patentansprüche

1. Verfahren zur Verteilung von Software auf eine Anzahl Computer (C1, ..., C5) in einem Netzwerk,
insbesondere einer industriellen Automatisierungsanordnung, wobei auf zumindest einem zentralen Server eine Anzahl verschiedener Software-Einheiten (SE1, ..., SEn) bereitgestellt wird,
**dadurch gekennzeichnet,**
**dass** in einem ersten Schritt in dem oder für den zumindest einen zentralen Server (SRV) eine Anzahl Profile (PD1, ..., PDn) gespeichert wird,
wobei jedem der Profile (PD1, ..., PDn) jeweils eine Untermenge der Software-Einheiten (SE1, ..., SEn) zugeordnet wird,
in einem zweiten Schritt für zumindest einen der Computer (C1, ..., C5) anhand seiner Eigenschaften die Zugehörigkeit zumindest einem der Profile (PD1, ..., PDn) festgestellt wird, und
in einem dritten Schritt die dem festgestellten Profil oder den festgestellten Profilen (PD1, ..., PDn) zugeordneten der Software-Einheiten (SE1, ..., SEn) zu diesem Computer (C1, ..., C5) übertragen und dort installiert oder angewendet werden.

2. Verfahren nach Patentanspruch 1,
**dadurch gekennzeichnet,**
**dass** als der Computer (C1, ..., C5) eine industrielle Automatisierungskomponente verwendet wird, insbesondere eine industrielle Steuerung, ein industrielles Bedien- und Beobachtungsgerät, ein industrielles SCADA-Gerät oder eine industrielle Netzwerk-Komponente.

3. Verfahren nach einem der vorhergehenden Patentansprüche,
**dadurch gekennzeichnet,**
**dass** als die Eigenschaft ein Geräte-Typ verwendet wird, wobei zumindest bezüglich des Geräte-Typs zwischen einer Steuerung, einem Bedien- und Beobachtungsgerät und einer Netzwerk-Komponente unterschieden wird.

4. Verfahren nach einem der vorhergehenden Patentansprüche,
**dadurch gekennzeichnet,**
**dass** als die Eigenschaft eine topologische Information über den Computer (C1, ..., C5) verwendet wird, insbesondere die Zugehörigkeit des Computers (C1, ..., C5) zu einer spezifischen Teilanlage, einer Produktionslinie oder einem bestimmten physischen Netzwerk-Segment.

5. Verfahren nach einem der vorhergehenden Patentansprüche,
**dadurch gekennzeichnet,**
**dass** als die Eigenschaft die Zugehörigkeit des Computers (C1, ..., C5) zu einem logischen Netzwerk-Segment verwendet wird, insbesondere zu einem ERP-Netz, einem redundanten Anlagenbus, einem Verwaltungs-Netzwerk, oder einem Segment hinter einer spezifischen Firewall.

6. Verfahren nach einem der vorhergehenden Patentansprüche,
**dadurch gekennzeichnet,**
**dass** bei einem neu in das Netzwerk eingebrachten Computer (C1, ..., C5) automatisch die Zuweisung zu zumindest einem oder mehreren der Profile (PD1, ..., PDn) erfolgt und automatisch die diesem Profil oder den mehreren Profilen (PD1, ..., PDn) zugeordneten der Software-Einheiten (SE1, ..., SEn) zu diesem Computer (C1, ..., C5) übertragen werden.

7. Verfahren nach einem der vorhergehenden Patentansprüche,
**dadurch gekennzeichnet,**
**dass** bei einem bereits zumindest einem Profil (PD1, ..., PDn) zugeordneten Computer (C1, ..., C5) die Zuordnung zu den Profilen erneut durchgeführt oder korrigiert wird und die auf diesem Computer installierten Software-Einheiten (SE1, ..., SEn) entsprechend der aktualisierten oder korrigierten Zuordnungen angepasst werden.

8. Verfahren nach einem der vorhergehenden Patentansprüche,
**dadurch gekennzeichnet,**
**dass** in dem Fall, in dem die Zuordnung von Software-Einheiten (SE1, ..., SEn) zu den Profilen (PD1, ..., PDn) geändert wird oder von zumindest einer der Software-Einheiten (SE1, ..., SEn) eine aktualisierte Version bereitgestellt wird, die auf dem betreffenden Computer (C1, ..., C5) installierten oder angewendeten Software-Einheiten (SE1, ..., SEn) automatisch aktualisiert oder angepasst werden.

9. Verfahren nach einem der vorhergehenden Patentansprüche,
**dadurch gekennzeichnet,**
**dass** die Zuordnung des Computers (C1, ..., C5) zu den Profilen (PD1, ..., PDn) seitens des zentralen Servers erfolgt,
wobei Informationen über die Eigenschaften des jeweiligen Computers (C1, ..., C5) zumindest teilweise von diesem Computer(C1, ..., C5) zu dem zentralen Server übermittelt werden.

10. Verfahren nach einem der vorhergehenden Patentansprüche,
**dadurch gekennzeichnet,**
**dass** der zentrale Server als ein Dienst in einem verteilten Netzwerk, insbesondere einer Cloud-Umgebung, einem Intranet oder dem Internet, bereitgestellt wird.

11. Verfahren nach einem der vorhergehenden Patentansprüche,
**dadurch gekennzeichnet,**
**dass** vor dem Übertragen der Software-Einheiten zu dem Computer von diesem Computer (C1, ..., C5) zu dem zentralen Server ein Zertifikat übertragen und dieses seitens des zentralen Servers überprüft wird,
wobei die tatsächliche Übertragung oder Freischaltung zumindest einer der Software-Einheiten (SE1, ..., SEn) nur bei einer Gültigkeit der Zertifikats für diesen Computer und für diese betreffende der Software-Einheiten (SE1, ..., SEn) gegeben ist.

12. Server zur Verteilung von Software auf eine Anzahl Computer in einem Netzwerk,
insbesondere einer industriellen Automatisierungsanordnung, wobei auf diesem zentralen Server eine Anzahl verschiedener Software-Einheiten (SE1, ..., SEn) bereitgestellt ist,
**dadurch gekennzeichnet,**
**dass** auf dem oder zugreifbar für den zentralen Server eine Anzahl Profile (PD1, ..., PDn) gespeichert ist,
wobei jedem der Profile (PD1, ..., PDn) jeweils eine Untermenge der Software-Einheiten (SE1, ..., SEn) zugeordnet ist,
**dass** der Server dazu eingerichtet ist, für zumindest einen der Computer (C1, ..., C5) anhand seiner Eigenschaften die Zugehörigkeit zu zumindest einem der Profile (PD1, ..., PDn) festzustellen, und
**dass** der Server (SRV) dazu eingerichtet ist, die dem festgestellten Profil oder den festgestellten Profilen (PD1, ..., PDn) zugeordneten Software-Einheiten (SE1, ..., SEn) zu diesem Computer zu übertragen.
